(19) 

Europäisches
Patentamt
European
Patent Office
Office européen
des brevets

(11) **EP 4 787 593 A1**

(12) **EUROPEAN PATENT APPLICATION**

published in accordance with Art. 153(4) EPC

(43) Date of publication:
**05.08.2026 Bulletin 2026/32**

(21) Application number: **24885883.9**

(22) Date of filing: **01.11.2024**

(51) International Patent Classification (IPC):
*H01M 50/451* (2021.01)    *H01M 50/414* (2021.01)
*H01M 50/42* (2021.01)    *H01M 50/434* (2021.01)
*H01M 50/443* (2021.01)    *H01M 50/446* (2021.01)
*H01M 50/457* (2021.01)    *H01M 50/489* (2021.01)
*H01M 50/491* (2021.01)

(52) Cooperative Patent Classification (CPC):
**H01M 50/414; H01M 50/42; H01M 50/434;
H01M 50/443; H01M 50/446; H01M 50/451;
H01M 50/457; H01M 50/489; H01M 50/491;
Y02E 60/10**

(86) International application number:
**PCT/JP2024/039134**

(87) International publication number:
**WO 2025/095119 (08.05.2025 Gazette 2025/19)**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **02.11.2023 JP 2023188884**

(71) Applicant: **TEIJIN LIMITED**
**Kita-ku,**
**Osaka-shi,**
**Osaka 530-0005 (JP)**

(72) Inventor: **NISHIKAWA, Satoshi**
**Osaka-shi, Osaka 530-0005 (JP)**

(74) Representative: **Berggren Oy**
**P.O. Box 16**
**Fabianinkatu 21**
**00101 Helsinki (FI)**

(54) **SEPARATOR FOR NONAQUEOUS SECONDARY BATTERIES, AND NONAQUEOUS SECONDARY BATTERY**

(57)    A separator for a non-aqueous secondary battery includes: a porous substrate; a heat-resistant layer disposed on one surface or both surfaces of the porous substrate and containing inorganic particles and a binder resin; and an adhesive layer disposed on one surface or both surfaces of a laminate including the porous substrate and the heat-resistant layer and containing acrylic resin particles, in which the inorganic particles have a mass proportion of 95 mass% or more in the heat-resistant layer, the inorganic particles contained in the heat-resistant layer have an average primary particle diameter of 0.01 $\mu$m to 0.30 $\mu$m, the binder resin includes at least one selected from the group consisting of a butadiene-based polymer and an acrylic resin, and the adhesive layer has a mass per unit area of 0.2 g/m$^2$ to 0.5 g/m$^2$ in total of both surfaces.

FIG.1

EP 4 787 593 A1

## Description

Technical Field

The present disclosure relates to a separator for a non-aqueous secondary battery and a non-aqueous secondary battery.

Background Art

Patent Literature 1 discloses a separator for a non-aqueous secondary battery including: a porous substrate; a heat-resistant porous layer provided on one surface or both surfaces of the porous substrate and containing a binder resin and inorganic particles having an average primary particle diameter of 0.01 μm or more and less than 0.45 μm; and an adhesive layer provided on one surface or both surfaces of a laminate including the porous substrate and the heat-resistant porous layer and containing adhesive resin particles adhering to the laminate.

Patent Literature 2 discloses a separator for a non-aqueous secondary battery including: a porous substrate; and an adhesive layer containing at least one selected from the group consisting of (i) adhesive resin particles containing a phenyl group-containing acrylic resin and a polyvinylidene fluoride-based resin, and (ii) a mixture of adhesive resin particles containing a phenyl group-containing acrylic resin and adhesive resin particles containing a polyvinylidene fluoride-based resin on one surface or both surfaces of the porous substrate.

Patent Literature 3 discloses a ceramic-polymer composite coating lithium ion separator including: a polyolefin porous separator; a ceramic coating layer with which one surface or both surfaces of the separator is coated; and a polymer coating layer with which a ceramic surface or a separator surface is coated.

Citation List

Patent Literature

Patent Literature 1: WO2020/246497
Patent Literature 2: JP2023-040938A
Patent Literature 3: JP2019-523518A

Summary of Invention

Technical Problem

An object of the present disclosure is to provide a separator for a non-aqueous secondary battery having excellent adhesiveness to an electrode and having improved cycle properties and impact resistance of a battery.

Solution to Problem

Specific means for solving the above problems include the following aspects.

<1> A separator for a non-aqueous secondary battery including:

a porous substrate;
a heat-resistant layer disposed on one surface or both surfaces of the porous substrate and containing inorganic particles and a binder resin; and
an adhesive layer disposed on one surface or both surfaces of a laminate including the porous substrate and the heat-resistant layer and containing acrylic resin particles, in which
the inorganic particles have a mass proportion of 95 mass% or more in the heat-resistant layer,
the inorganic particles contained in the heat-resistant layer have an average primary particle diameter of 0.01 μm to 0.30 μm,
the binder resin includes at least one selected from the group consisting of a butadiene-based polymer and an acrylic resin, and
the adhesive layer has a mass per unit area of 0.2 g/m$^2$ to 0.5 g/m$^2$ in total of both surfaces.

<2> The separator for a non-aqueous secondary battery according to <1>, in which the inorganic particles include at least one selected from the group consisting of metal oxide particles, metal hydroxide particles, and metal sulfate particles.

<3> The separator for a non-aqueous secondary battery according to <1>, in which the inorganic particles include barium sulfate particles.

<4> The separator for a non-aqueous secondary battery according to any one of <1> to <3>, in which the acrylic resin particles contained in the adhesive layer has an average primary particle diameter of 50 nm to 1,000 nm.

<5> The separator for a non-aqueous secondary battery according to any one of <1> to <4>, in which the porous substrate has a thickness of 1 $\mu$m to 7 $\mu$m.

<6> The separator for a non-aqueous secondary battery according to any one of <1> to <5>, in which the heat-resistant layer has a thickness of 0.1 $\mu$m to 2 $\mu$m per layer.

<7> The separator for a non-aqueous secondary battery according to any one of <1> to <6>, in which the adhesive layer further contains a butadiene-acrylonitrile-based resin.

<8> The separator for a non-aqueous secondary battery according to any one of <1> to <7>, in which a difference between a Gurley value of the laminate and a Gurley value of the separator for a non-aqueous secondary battery is 30 s/100 mL or less.

<9> A non-aqueous secondary battery that obtains an electromotive force by doping and de-doping a lithium ion, the non-aqueous secondary battery including:

a positive electrode;
a negative electrode; and
the separator for a non-aqueous secondary battery according to any one of <1> to <8> disposed between the positive electrode and the negative electrode.

Advantageous Effects of Invention

According to the present disclosure, there is provided a separator for a non-aqueous secondary battery having excellent adhesiveness to an electrode and having improved cycle properties and impact resistance of a battery.

Brief Description of Drawings

[FIG. 1] FIG. 1 is a schematic cross-sectional view of an example of a separator according to the present disclosure.
[FIG. 2] FIG. 2 is a schematic cross-sectional view of an example of the separator according to the present disclosure.
[FIG. 3] FIG. 3 is a schematic cross-sectional view of an example of the separator according to the present disclosure.
[FIG. 4] FIG. 4 is a schematic cross-sectional view of an example of the separator according to the present disclosure.
[FIG. 5] FIG. 5 is a schematic cross-sectional view of an example of the separator according to the present disclosure.

Description of Embodiments

Hereinafter, embodiments of the present disclosure will be described. These descriptions and examples are illustrative of embodiments and do not limit the scope of the embodiments.

In the present disclosure, a numerical range indicated using "to" indicates a range including numerical values described before and after "to" as a minimum value and a maximum value, respectively.

In a numerical range described stepwise in the present disclosure, an upper limit value or a lower limit value described in one numerical range may be replaced with an upper limit value or a lower limit value of another numerical range described in a stepwise manner. In addition, in the numerical range described in the present disclosure, the upper limit value or the lower limit value of the numerical range may be replaced with a value shown in Examples.

In the present disclosure, "A and/or B" is synonymous with "at least one of A and B". That is, "A and/or B" means that it may be only A, may be only B, or may be a combination of A and B.

In the present disclosure, the term "step" includes not only an independent step but also a step that cannot be clearly distinguished from other steps as long as the purpose of the step is achieved.

In the present disclosure, in the case of referring to an amount of each component in a composition, when there are a plurality of substances corresponding to each component in the composition, the amount means a total amount of the plurality of substances present in the composition unless otherwise specified.

In the present disclosure, a plurality of kinds of particles corresponding to each component may be contained. When there are a plurality of kinds of particles corresponding to each component in the composition, a particle diameter of each component means a value of a mixture of the plurality of kinds of particles present in the composition unless otherwise specified.

In the present disclosure, MD (machine direction) means a longitudinal direction of a separator produced in a long shape, and TD (transverse direction) means a direction orthogonal to MD in a surface direction of the separator. In the present disclosure, TD is also referred to as a "width direction".

In the present disclosure, when a lamination relationship of layers constituting the separator is expressed by "upper" and "lower", the layer closer to a porous substrate is referred to as "lower", and the layer farther from the porous substrate is referred to as "upper".

In the present disclosure, a volume of the porous layer excluding pores is referred to as a "solid content volume".

In the present disclosure, performing a hot press treatment after impregnating the separator with an electrolyte solution is referred to as "wet heat press", and performing a hot press treatment without impregnating the separator with an electrolyte solution is referred to as "dry heat press".

In the present disclosure, a "monomer unit" of a polymer or a resin means a constituent unit of the polymer or the resin which is obtained by polymerizing a monomer.

In the present disclosure, the expression "(meth)acryl" means either "acryl" or "methacryl".

<Separator for Non-aqueous Secondary Battery>

A separator for a non-aqueous secondary battery according to the present disclosure (also simply referred to as a "separator" in the present disclosure) includes a porous substrate, a heat-resistant layer disposed on one surface or both surfaces of the porous substrate and containing inorganic particles and a binder resin, and an adhesive layer disposed on one surface or both surfaces of a laminate including the porous substrate and the heat-resistant layer and containing acrylic resin particles.

In the separator according to the present disclosure, the inorganic particles have a mass proportion of 95 mass% or more in the heat-resistant layer, the inorganic particles contained in the heat-resistant layer have an average primary particle diameter of 0.01 $\mu$m to 0.30 $\mu$m, the binder resin contained in the heat-resistant layer contains at least one selected from the group consisting of a butadiene-based polymer and an acrylic resin, and the adhesive layer has a mass per unit area of 0.2 g/m$^2$ to 0.5 g/m$^2$ in total of both surfaces.

With the separator according to the present disclosure having the above configuration, the separator has excellent adhesiveness to an electrode and has improved cycle properties and impact resistance of a battery.

The mass proportion of the inorganic particles in the heat-resistant layer is 95 mass% or more, preferably 96 mass% or more, and more preferably 97 mass% or more, from the viewpoint of improving the impact resistance of the battery.

The mass proportion of the inorganic particles in the heat-resistant layer is preferably 99 mass% or less, and more preferably 98 mass% or less, from the viewpoint of moldability of the heat-resistant layer. In other words, a mass proportion of the binder resin in the heat-resistant layer is preferably 1 mass% or more, and more preferably 2 mass% or more, from the viewpoint of the moldability of the heat-resistant layer.

The average primary particle diameter of the inorganic particles contained in the heat-resistant layer is 0.01 $\mu$m or more, preferably 0.05 $\mu$m or more, and more preferably 0.08 $\mu$m or more, from the viewpoint of ion permeability of the heat-resistant layer.

The average primary particle diameter of the inorganic particles contained in the heat-resistant layer is 0.30 $\mu$m or less, preferably 0.20 $\mu$m or less, and more preferably 0.15 $\mu$m or less, from the viewpoint of thinning the heat-resistant layer and from the viewpoint of the moldability of the heat-resistant layer containing a large amount of inorganic particles.

The binder resin contained in the heat-resistant layer contains at least one selected from the group consisting of a butadiene-based polymer and an acrylic resin from the viewpoint of binding a large amount of inorganic particles. With resins other than the butadiene-based polymer and the acrylic resin (for example, aramid), a large amount of inorganic particles cannot be bound, and the heat-resistant layer cannot be formed in some cases.

A content of the inorganic particles in the heat-resistant layer is 95 mass% or more for the purpose of improving the impact resistance of the battery. In order to mold the heat-resistant layer containing a large amount of inorganic particles and to mold the heat-resistant layer as thin as possible, the average primary particle diameter of the inorganic particles is 0.30 $\mu$m or less, and the binder resin includes at least one selected from the group consisting of a butadiene-based polymer and an acrylic resin.

The adhesive layer contains acrylic resin particles.

A mass per unit area of the adhesive layer (in total of both surfaces) is 0.2 g/m$^2$ or more, and preferably 0.3 g/m$^2$ or more, from the viewpoint of the adhesiveness to the electrode.

The mass per unit area of the adhesive layer (in total of both surfaces) is 0.5 g/m$^2$ or less, and preferably 0.4 g/m$^2$ or less, from the viewpoint that the adhesive layer is thin and the battery has excellent cycle properties.

A layer configuration of the separator according to the present disclosure will be described with reference to the drawings.

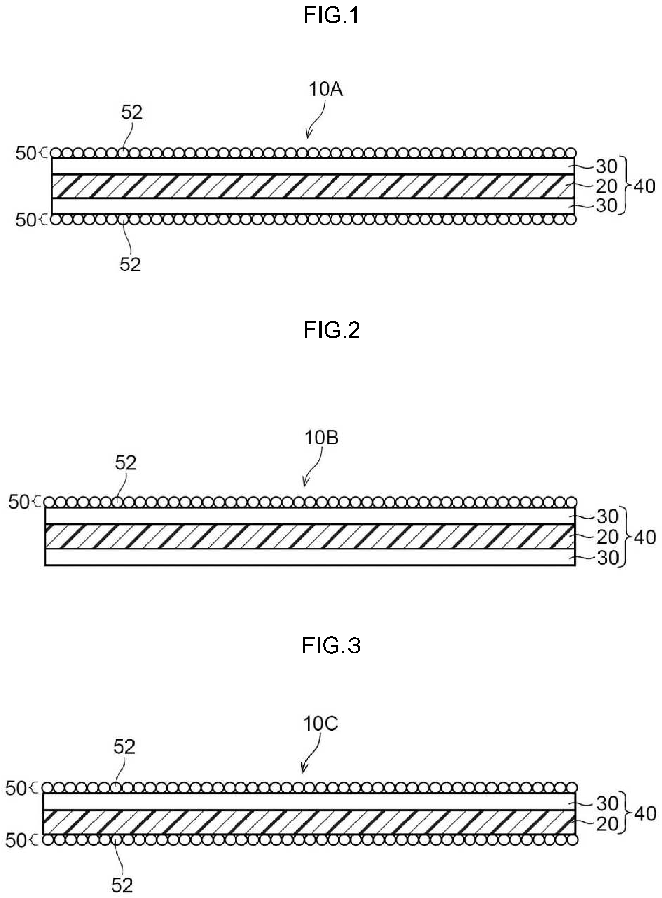

Each of FIG. 1 to FIG. 5 is a schematic cross-sectional view of an embodiment example of the separator according to the present disclosure. FIG. 1 to FIG. 5 are schematic cross-sectional views mainly illustrating a lamination order of layers, and a structure of each layer is abstracted or simplified. In FIG. 1 to FIG. 5, layers having similar functions are denoted by the same reference numerals.

A separator 10A shown in FIG. 1 is a separator in which heat-resistant layers 30 are disposed on both surfaces of a porous substrate 20 and adhesive layers 50 are disposed on both surfaces of a laminate 40 including the porous substrate 20 and two heat-resistant layers 30. Components and/or compositions in one heat-resistant layer 30 and the other heat-resistant layer 30 may be the same as or different from each other. Components and/or compositions of one adhesive layer 50 and the other adhesive layer 50 may be the same as or different from each other.

A separator 10B shown in FIG. 2 is a separator in which the heat-resistant layers 30 are disposed on both surfaces of the porous substrate 20 and the adhesive layer 50 is disposed on one surface of the laminate 40 including the porous substrate 20 and two heat-resistant layers 30. Components and/or compositions in one heat-resistant layer 30 and the other heat-resistant layer 30 may be the same as or different from each other.

A separator 10C shown in FIG. 3 is a separator in which the heat-resistant layer 30 is disposed on one surface of the porous substrate 20 and the adhesive layers 50 are disposed on both surfaces of the laminate 40 including the porous substrate 20 and one heat-resistant layer 30. Components and/or compositions of one adhesive layer 50 and the other adhesive layer 50 may be the same as or different from each other.

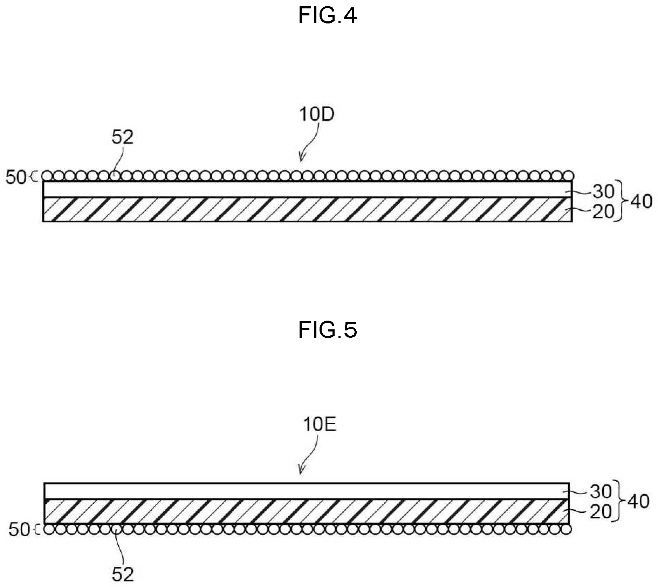

A separator 10D shown in FIG. 4 is a separator in which the heat-resistant layer 30 is disposed on one surface of the porous substrate 20 and the adhesive layer 50 is disposed on one surface of the laminate 40 including the porous substrate 20 and one heat-resistant layer 30. In the separator 10D, the adhesive layer 50 is disposed on the surface of the heat-resistant layer 30.

A separator 10E shown in FIG. 5 is a separator in which the heat-resistant layer 30 is disposed on one surface of the porous substrate 20 and the adhesive layer 50 is disposed on one surface of the laminate 40 including the porous substrate 20 and one heat-resistant layer 30. In the separator 10E, the adhesive layer 50 is disposed on the surface of the porous substrate 20.

The heat-resistant layer 30 is a layer containing inorganic particles and a binder resin, and is a layer disposed on the surface of the porous substrate 20. The heat-resistant layer 30 may be provided only on one surface of the porous substrate 20 or may be provided on both surfaces of the porous substrate 20. When the heat-resistant layers 30 are provided on both surfaces of the porous substrate 20, heat resistance of the separator is more excellent, and safety of the battery can be further improved. In addition, the separator is less likely to curl and has excellent handleability during production of the battery. When the heat-resistant layer 30 is provided only on one surface of the porous substrate 20, the ion permeability of the separator is more excellent. In addition, a thickness of the entire separator can be reduced, and a battery having a higher energy density can be produced.

The adhesive layer 50 is a layer disposed on the surface of the porous substrate 20 or the heat-resistant layer 30 and is present as the outermost layer of the separator. The adhesive layer 50 may be provided only on one surface of the laminate 40 or on both surfaces of the laminate 40. When the adhesive layer 50 is provided only on one surface of the laminate 40, the adhesive layer 50 is preferably disposed on the surface of the heat-resistant layer 30. The adhesive layer 50 may be selected to be disposed on one surface or both surfaces of the laminate 40 in accordance with a composition or surface properties of a positive electrode or a negative electrode of the battery. When the adhesive layer 50 is provided only on one surface of the laminate 40, the thickness of the entire separator can be reduced, and a battery having a higher energy density can be produced.

The adhesive layer 50 is a layer containing acrylic resin particles 52. The adhesive layer 50 preferably has a structure in which a large amount of acrylic resin particles 52 are arranged adjacent to each other on the surface of the laminate 40 from the viewpoint of excellent adhesiveness to the electrode, and the acrylic resin particles 52 preferably form a one-layer structure in the thickness direction from the viewpoint of increasing the energy density of the battery. However, the structure of the adhesive layer 50 is not limited to the above structure, and the adhesive layer 50 may have a structure in which a large amount of acrylic resin particles 52 are scattered on the surface of the laminate 40, or may have a structure in which a plurality of layers of acrylic resin particles 52 are laminated in the thickness direction, or the acrylic resin particles 52 may be bound to the surface of the laminate 40 by another resin.

In the separator in a state of being bonded to an electrode, some or all of the acrylic resin particles 52 contained in the adhesive layer 50 are melted by heat application for bonding the separator to the electrode, adjacent acrylic resin particles 52 are connected to each other, and some or all of the acrylic resin particles 52 do not retain a particle shape in some cases.

Hereinafter, details of the porous substrate, the heat-resistant layer, and the adhesive layer of the separator according to the present disclosure will be described.

[Porous Substrate]

In the present disclosure, the porous substrate means a substrate having pores or voids therein. Examples of such a substrate include: a microporous film; a porous sheet composed of a fibrous material, such as a non-woven fabric and paper; and a composite porous sheet in which one or more other porous layers are laminated on the microporous film or the porous sheet. In the present disclosure, a microporous film is preferred from the viewpoint of thinning and strength of the separator. The microporous film means a film having a large number of micropores therein, having a structure in which the micropores are connected to each other and allowing a gas or a liquid to pass from one surface to the other surface.

A material of the porous substrate is preferably an electrically insulating material.

The porous substrate preferably contains a thermoplastic resin, in order to impart a shutdown function to the porous substrate. The shutdown function refers to a function of dissolving a constituent material to clog the pores of the porous substrate, thereby blocking ion migration and preventing thermal runaway of the battery, when a battery temperature is raised. The thermoplastic resin is preferably a thermoplastic resin having a melting point lower than 200°C. Examples of the thermoplastic resin include a polyester such as polyethylene terephthalate, and a polyolefin such as a polyethylene and a polypropylene, and among these, a polyolefin is preferred.

The porous substrate is preferably a microporous film containing a polyolefin (referred to as a "polyolefin microporous film" in the present disclosure). Examples of the polyolefin microporous film include polyolefin microporous films applicable to a separator for a battery in the related art, and among these, one having sufficient mechanical properties and ion permeability is preferably selected.

From the viewpoint of exhibiting the shutdown function, the polyolefin microporous film is preferably a microporous film containing a polyethylene, and a content of the polyethylene is preferably 95 mass% or more with respect to a mass of the entire polyolefin microporous film.

The polyolefin microporous film is preferably a microporous film containing a polypropylene, from the viewpoint of imparting the heat resistance to the extent that the film is less likely to break when exposed to a high temperature.

The polyolefin microporous film is preferably a polyolefin microporous film containing a polyethylene and a polypropylene, from the viewpoint of imparting the shutdown function and the heat resistance to the extent that the film is less likely to break when exposed to a high temperature. Examples of the polyolefin microporous film containing a polyethylene and a polypropylene include a microporous film in which a polyethylene and a polypropylene are mixed in one layer. The microporous film preferably contains 95 mass% or more of the polyethylene and 5 mass% or less of the polypropylene, from the viewpoint of achieving both the shutdown function and the heat resistance. In addition, a polyolefin microporous film having a lamination structure with two or more layers in which at least one layer contains a polyethylene and at least one layer contains a polypropylene is also preferred from the viewpoint of achieving both the shutdown function and the heat resistance.

The polyolefin contained in the polyolefin microporous film is preferably a polyolefin having a weight-average molecular weight (Mw) of 100,000 to 5,000,000. When the Mw of the polyolefin is 100,000 or more, sufficient mechanical properties can be imparted to the microporous film. On the other hand, when the Mw of the polyolefin is 5,000,000 or less, shutdown properties of the microporous film is favorable, and the microporous film is likely to mold.

Examples of a method for producing the polyolefin microporous film include: a method of extruding a molten polyolefin resin from a T-die to form a sheet, crystallizing and then stretching the sheet, and then subjecting the stretched sheet to a heat treatment, thereby obtaining a microporous film; and a method of extruding a polyolefin resin melted with a plasticizer such as liquid paraffin from a T-die, cooling the resin to form a sheet, stretching the sheet, then extracting the plasticizer, and subjecting the stretched sheet to a heat treatment, thereby obtaining a microporous film.

Examples of the porous sheet composed of a fibrous material include porous sheets, such as a non-woven fabric and paper, composed of fibrous materials, including polyesters such as polyethylene terephthalate, polyolefins such as a polyethylene and a polypropylene, heat-resistant resins such as a wholly aromatic polyamide, a polyamideimide, a polyimide, a polyethersulfone, a polysulfone, a polyetherketone, and a polyetherimide, and celluloses.

In the present disclosure, the heat-resistant resin refers to a resin having a melting point of 200°C or higher or a resin having no melting point and having a decomposition temperature of 200°C or higher. That is, the heat-resistant resin in the present disclosure is a resin that is not melted or decomposed in a temperature range of lower than 200°C.

Examples of the composite porous sheet include a sheet in which a functional layer is laminated on a microporous film or a porous sheet composed of a fibrous material. Such a composite porous sheet is preferred from the viewpoint that a function can be further added with the functional layer. Examples of the functional layer include a porous layer composed of a heat-resistant resin from the viewpoint of imparting the heat resistance. Examples of the heat-resistant resin include one kind or two or more kinds of heat-resistant resins selected from a wholly aromatic polyamide, a polyamideimide, a polyimide, a polyethersulfone, a polysulfone, a polyetherketone, and a polyetherimide. Examples of a method of forming the composite porous sheet include a method of coating a microporous film or a porous sheet with a functional layer, a method of bonding a microporous film or a porous sheet and a functional layer with an adhesive, and a method of thermally press-bonding a microporous film or a porous sheet with a functional layer.

The surface of the porous substrate may be subjected to various surface treatments within the range of not impairing the nature of the porous substrate, for the purpose of improving wettability with a coating liquid for forming the heat-resistant layer or the adhesive layer. Examples of the surface treatment include a corona treatment, a plasma treatment, a flame treatment, and a UV irradiation treatment.

-Properties of Porous Substrate-

A thickness of the porous substrate is preferably 1 $\mu$m or more, more preferably 3 $\mu$m or more, and still more preferably 5 $\mu$m or more, from the viewpoint of mechanical strength.

The thickness of the porous substrate is preferably 7 $\mu$m or less, and more preferably 6 $\mu$m or less, from the viewpoint of increasing the energy density of the battery.

The thickness of the porous substrate is determined by measuring thicknesses at 20 points in a 10-cm square using a contact-type thickness meter and taking an average thereof.

A Gurley value of the porous substrate is preferably 30 s/100 mL or more, more preferably 50 s/100 mL or more, and still more preferably 70 s/100 mL or more, from the viewpoint of suppressing a short circuit of the battery.

The Gurley value of the porous substrate is preferably 200 s/100 mL or less, more preferably 180 s/100 mL or less, and still more preferably 160 s/100 mL or less, from the viewpoint of the ion permeability and from the viewpoint of suppressing clogging of the porous structure at a boundary between the porous substrate and the heat-resistant layer or the adhesive layer when exposed to a high temperature.

The Gurley value of the porous substrate is determined by measurement using a Gurley densometer according to JIS P8117:2009.

A porosity of the porous substrate is preferably 30% to 60% from the viewpoint of the ion permeability.

The porosity $\varepsilon$ (%) of the porous substrate is determined according to the following equation.

$$\varepsilon = \{1 - Ws/(ds \cdot t)\} \times 100$$

Here, Ws is a basis weight (g/m$^2$) of the porous substrate, ds is a true density (g/cm$^3$) of the porous substrate, and t is the thickness ($\mu$m) of the porous substrate. The basis weight refers to the mass per unit area.

[Heat-resistant Layer]

The heat-resistant layer contains at least inorganic particles and a binder resin. The binder resin includes at least one selected from the group consisting of a butadiene-based polymer and an acrylic resin.

-Inorganic Particles-

Examples of the inorganic particles include metal oxide particles, metal hydroxide particles, metal sulfate particles, metal carbonate particles, metal nitride particles, and clay mineral particles.

Examples of a metal oxide constituting the metal oxide particles include silica, alumina, boehmite (alumina monohydrate), titania, zirconia, magnesium oxide, and barium oxide, and alumina is preferred.

Examples of a metal hydroxide constituting the metal hydroxide particles include magnesium hydroxide, aluminum hydroxide, calcium hydroxide, chromium hydroxide, zirconium hydroxide, cerium hydroxide, nickel hydroxide, and boron hydroxide, and magnesium hydroxide is preferred.

Examples of a metal sulfate constituting the metal sulfate particles include barium sulfate and calcium sulfate, and barium sulfate is preferred.

Examples of a metal carbonate constituting the metal carbonate particles include calcium carbonate, magnesium carbonate, and barium carbonate.

Examples of a metal nitride constituting the metal nitride particles include boron nitride and aluminum nitride.

Examples of the clay mineral particles include calcium silicate and talc.

The inorganic particles may be inorganic particles surface-modified with a silane coupling agent or the like.

One kind of the inorganic particles may be used alone, or a combination of two or more kinds thereof may be used.

The inorganic particles are preferably at least one selected from the group consisting of metal oxide particles, metal hydroxide particles, and metal sulfate particles from the viewpoint of stability to an electrolyte solution and electrochemical stability.

As the inorganic particles, metal sulfate particles are preferred, and barium sulfate particles are more preferred, from the viewpoint that the particles are less likely to decompose the electrolyte solution or an electrolyte and is thus less likely to cause gas generation in the battery.

A particle shape of the inorganic particles is not limited and may be any of a spherical shape, an elliptical shape, a plate shape, a needle shape, and an indefinite shape. The inorganic particles contained in the heat-resistant layer are preferably plate-shaped particles or non-aggregated primary particles from the viewpoint of suppressing a short circuit of the battery.

The average primary particle diameter of the inorganic particles contained in the heat-resistant layer is 0.01 $\mu$m to 0.30 $\mu$m, preferably 0.05 $\mu$m to 0.20 $\mu$m, and more preferably 0.08 $\mu$m to 0.15 $\mu$m.

The average primary particle diameter of the inorganic particles is determined by measuring major diameters of 100 inorganic particles randomly selected in observation using a scanning electron microscope (SEM) and averaging the major diameters of the 100 particles. A sample subjected to the SEM observation is inorganic particles as a material forming the heat-resistant layer or inorganic particles extracted from the heat-resistant layer. A method for extracting the inorganic particles from the heat-resistant layer is not limited. Examples of the method include: a method of immersing the heat-resistant layer peeled off from the separator in an organic solvent that dissolves a binder resin, dissolving the binder resin in the organic solvent, and extracting the inorganic particles; and a method of heating the heat-resistant layer peeled off from the separator to about 800°C to eliminate the binder resin and extracting the inorganic particles.

A density (g/cm$^3$) of the inorganic particles is preferably 1.5 to 11.0, more preferably 2.0 to 5.5, and still more preferably 3.5 to 5.0, from the viewpoint of setting the content of the inorganic particles in the heat-resistant layer to 95 mass% or more and from the viewpoint of temporal stability and coatability of a heat-resistant layer forming coating liquid.

The mass proportion of the inorganic particles in the heat-resistant layer is 95 mass% or more, preferably 96 mass% to 99 mass%, and more preferably 97 mass% to 98 mass% or less.

When the inorganic particles are barium sulfate particles, the mass proportion of the barium sulfate particles in the heat-resistant layer is preferably 95 mass% or more, more preferably 96 mass% to 99 mass%, and still more preferably 97 mass% to 98 mass% or less.

When the heat-resistant layers are disposed on both surfaces of the porous substrate, the kind and/or the content of the inorganic particles contained in one heat-resistant layer may be the same as or different from the kind and/or the content of the inorganic particles contained in the other heat-resistant layer.

-Organic Particles-

The heat-resistant layer may contain organic particles. Examples of the organic particles include: particles composed of a crosslinked polymer such as a crosslinked poly(meth)acrylic acid, a crosslinked poly(meth)acrylic acid ester, a crosslinked polysilicone, a crosslinked polystyrene, a crosslinked polydivinylbenzene, a styrenedivinylbenzene copolymer crosslinked product, a melamine resin, a phenol resin, and a benzoguanamine-formaldehyde condensate; and particles composed of a heat-resistant polymer such as a polysulfone, a polyacrylonitrile, an aramid, and a polyacetal.

The resin constituting the organic particles may be a mixture, a modified product, a derivative, a copolymer (a random copolymer, an alternating copolymer, a block copolymer, or a graft copolymer), or a crosslinked product of the above exemplary materials.

One kind of the organic particles may be used alone, or a combination of two or more kinds thereof may be used.

-Binder Resin-

The binder resin contained in the heat-resistant layer has an effect of binding the inorganic particles contained in the heat-resistant layer to each other, an effect of bonding the heat-resistant layer to the porous substrate, an effect of bonding the heat-resistant layer to the electrode, and an effect of improving the heat resistance of the heat-resistant layer. The binder resin contained in the heat-resistant layer may have a particle shape in the heat-resistant layer, may not have a specific shape, and may have any form as long as it can bind the inorganic particles to each other.

The binder resin contained in the heat-resistant layer includes at least one selected from the group consisting of a butadiene-based polymer and an acrylic resin.

Examples of the butadiene-based polymer include a homopolymer of butadiene and a copolymer of butadiene and a styrene-based monomer (that is, a styrene-butadiene copolymer). One kind of the resin may be used alone, or a combination of two or more kinds thereof may be used.

Examples of the styrene-based monomer constituting the styrene-butadiene copolymer include: styrene, $\alpha$-methylstyrene; an alkyl-substituted styrene such as 2-methylstyrene, 3-methylstyrene, 4-methylstyrene, 2-ethylstyrene, 3-ethylstyrene, and 4-ethylstyrene; a halogen-substituted styrene such as 2-chlorostyrene, 3-chlorostyrene, and 4-chlorostyrene; and a fluorine-substituted styrene such as 4-fluorostyrene and 2,5-difluorostyrene. The styrene-based monomer is preferably styrene or $\alpha$-methylstyrene, and more preferably styrene. One kind of the styrene-based monomer may be used alone, or two or more kinds thereof may be used.

A small amount of an acrylic monomer may be copolymerized in the styrene-butadiene copolymer. The acrylic monomer is preferably a (meth)acrylic acid alkyl ester. An alkyl group in an ester moiety of the (meth)acrylic acid alkyl ester is preferably an alkyl group having 1 to 10 carbon atoms, and more preferably an alkyl group having 1 to 8 carbon atoms.

Specific examples of the acrylic monomer include methyl (meth)acrylate, ethyl (meth)acrylate, isopropyl (meth)acrylate, n-butyl (meth)acrylate, and 2-ethylhexyl (meth)acrylate. One kind of the acrylic monomer may be used alone, or a combination of two or more kinds thereof may be used.

Examples of the acrylic resin include: a homopolymer or a copolymer of an acrylic monomer; and a copolymer of an acrylic monomer and a styrene-based monomer. One kind of the resin may be used alone, or a combination of two or more kinds thereof may be used.

Examples of the acrylic monomer of the acrylic resin include (meth)acrylic acid, methyl (meth)acrylate, ethyl (meth)acrylate, isopropyl (meth)acrylate, n-butyl (meth)acrylate, isobutyl (meth)acrylate, t-butyl (meth)acrylate, n-hexyl (meth)acrylate, 2-ethylhexyl (meth)acrylate, lauryl (meth)acrylate, stearyl (meth)acrylate, cyclohexyl (meth)acrylate, dicyclopentanyl (meth)acrylate, isobornyl (meth)acrylate, 2-hydroxyethyl (meth)acrylate, hydroxypropyl (meth)acrylate, and 4-hydroxybutyl (meth)acrylate. The acrylic monomer is preferably a (meth)acrylic acid alkyl ester. The alkyl group in the ester moiety of the (meth)acrylic acid alkyl ester is preferably an alkyl group having 1 to 10 carbon atoms, and more preferably an alkyl group having 1 to 8 carbon atoms. One kind of the acrylic monomer may be used alone, or a combination of two or more kinds thereof may be used.

Examples of the styrene-based monomer of the acrylic resin include: styrene, $\alpha$-methylstyrene; an alkyl-substituted styrene such as 2-methylstyrene, 3-methylstyrene, 4-methylstyrene, 2-ethylstyrene, 3-ethylstyrene, and 4-ethylstyrene; a halogen-substituted styrene such as 2-chlorostyrene, 3-chlorostyrene, and 4-chlorostyrene; and a fluorine-substituted styrene such as 4-fluorostyrene and 2,5-difluorostyrene. The styrene-based monomer is preferably styrene or $\alpha$-methylstyrene, and more preferably styrene. One kind of the styrene-based monomer may be used alone, or a combination of two or more kinds thereof may be used.

The heat-resistant layer may contain a resin other than the butadiene-based polymer and the acrylic resin. Examples of the other resin include a wholly aromatic polyamide (also referred to as an aramid), a polyamideimide, a poly-N-vinylacetamide, a polyacrylamide, a copolymerized polyether polyamide, a polyimide, a polyetherimide, a fluorine-based resin, a homopolymer or a copolymer of a vinyl nitrile compound (such as acrylonitrile or methacrylonitrile), carboxymethyl cellulose, a hydroxyalkyl cellulose, a polyvinyl alcohol, a polyvinyl butyral, a polyvinyl pyrrolidone, a polyether (such as polyethylene oxide or polypropylene oxide), a polysulfone, a polyketone, a polyetherketone, a polyethersulfone, and a mixture thereof. One kind of the resin may be used alone, or a combination of two or more kinds thereof may be used.

A mass proportion of the other resin in all resins of the heat-resistant layer is preferably 10 mass% or less, more preferably 5 mass% or less, and still more preferably 1 mass% or less, and the other resin is particularly preferably not substantially contained.

A total mass proportion of the butadiene-based polymer and the acrylic resin in all resins of the heat-resistant layer is preferably 90 mass% or more, more preferably 95 mass% or more, still more preferably 99 mass% or more, and particularly preferably 100 mass%.

The mass proportion of the binder resin in the heat-resistant layer is preferably 1 mass% or more, and more preferably 2 mass% or more, from the viewpoint of the moldability of the heat-resistant layer.

The mass proportion of the binder resin in the heat-resistant layer is preferably 5 mass% or less, more preferably 4 mass% or less, and still more preferably 3 mass%, from the viewpoint of increasing the content of the inorganic particles in the heat-resistant layer.

When the heat-resistant layers are disposed on both surfaces of the porous substrate, the kind and/or the content of the binder resin contained in one heat-resistant layer may be the same as or different from the kind and/or the content of the binder resin contained in the other heat-resistant layer.

-Other Components-

The heat-resistant layer may contain an additive, for example, a dispersant such as a surfactant, a wetting agent, an antifoaming agent, or a pH adjuster. The dispersant is added to a coating liquid for forming the heat-resistant layer for the purpose of improving dispersibility, the coatability, or storage stability. The wetting agent, the antifoaming agent, or the pH adjuster is added to the coating liquid for forming the heat-resistant layer, for example, for the purpose of improving compatibility with the porous substrate, for the purpose of suppressing mixing of air into the coating liquid, or for the purpose of adjusting the pH.

-Properties of Heat-resistant Layer-

A thickness per layer of the heat-resistant layer is preferably 0.1 $\mu$m or more, more preferably 0.5 $\mu$m or more, and still more preferably 0.8 $\mu$m or more, from the viewpoint of the heat resistance of the battery.

The thickness per layer of the heat-resistant layer is preferably 2 $\mu$m or less, more preferably 1.5 $\mu$m or less, and still more preferably 1.2 $\mu$m or less, from the viewpoint of the ion permeability and the energy density of the battery.

When the heat-resistant layers are disposed on both surfaces of the porous substrate, the thickness of the heat-resistant layer is preferably 0.2 $\mu$m or more, more preferably 1.0 $\mu$m or more, still more preferably 1.5 $\mu$m or more, and is preferably 4 $\mu$m or less, more preferably 3 $\mu$m or less, still more preferably 2.5 $\mu$m or less, in total of both surfaces.

The thickness of the heat-resistant layer is a value obtained by subtracting the thickness of the porous substrate from a thickness of a flat film obtained by removing the adhesive layer from the separator. The thickness of the flat film obtained by peeling off the adhesive layer from the separator is determined by measuring thicknesses at 20 points in a 10-cm square using a contact-type thickness meter and taking an average thereof.

A porosity of the heat-resistant layer is preferably 20% to 70% from the viewpoint of the ion permeability.

The porosity $\varepsilon$ (%) of the heat-resistant layer is determined according to the following equation.

[Math. 1]

$$\varepsilon = \left( 1 - \frac{\sum_{i=1}^{n} \frac{Wi}{di}}{t} \right) \times 100$$

Here, regarding a constituent material 1, a constituent material 2, a constituent material 3, ..., and a constituent material n of the heat-resistant layer, the mass per unit area of each constituent material is $W_1$, $W_2$, $W_3$, ..., and $W_n$ (g/cm$^2$), the true density of each constituent material is $d_1$, $d_2$, $d_3$, ..., and $d_n$ (g/cm$^3$), and the thickness of the heat-resistant layer is t (cm).

[Adhesive Layer]

The adhesive layer is a layer disposed on the surface of the heat-resistant layer or the porous substrate and is present as the outermost layer of the separator. The adhesive layer has a large number of gaps or micropores and is a layer through which a gas or a liquid can pass from one surface to the other surface.

-Acrylic Resin Particles-

The adhesive layer contains acrylic resin particles. Examples of an acrylic resin constituting the acrylic resin particles include a homopolymer or a copolymer of an acrylic monomer and a copolymer of an acrylic monomer and a styrene-based monomer. One kind of the resin may be used alone, or a combination of two or more kinds thereof may be used.

Examples of the acrylic monomer of the acrylic resin include (meth)acrylic acid, methyl (meth)acrylate, ethyl (meth)acrylate, isopropyl (meth)acrylate, n-butyl (meth)acrylate, isobutyl (meth)acrylate, t-butyl (meth)acrylate, n-hexyl (meth)acrylate, 2-ethylhexyl (meth)acrylate, lauryl (meth)acrylate, stearyl (meth)acrylate, cyclohexyl (meth)acrylate, dicyclopentanyl (meth)acrylate, isobornyl (meth)acrylate, 2-hydroxyethyl (meth)acrylate, hydroxypropyl (meth)acrylate, and 4-hydroxybutyl (meth)acrylate. The acrylic monomer is preferably a (meth)acrylic acid alkyl ester. The alkyl group in the ester moiety of the (meth)acrylic acid alkyl ester is preferably an alkyl group having 1 to 10 carbon atoms, and more preferably an alkyl group having 1 to 8 carbon atoms. One kind of the acrylic monomer may be used alone, or a combination of two or more kinds thereof may be used.

Examples of the styrene-based monomer of the acrylic resin include: styrene, $\alpha$-methylstyrene; an alkyl-substituted styrene such as 2-methylstyrene, 3-methylstyrene, 4-methylstyrene, 2-ethylstyrene, 3-ethylstyrene, and 4-ethylstyrene; a halogen-substituted styrene such as 2-chlorostyrene, 3-chlorostyrene, and 4-chlorostyrene; and a fluorine-substituted styrene such as 4-fluorostyrene and 2,5-difluorostyrene. The styrene-based monomer is preferably styrene or $\alpha$-methylstyrene, and more preferably styrene. One kind of the styrene-based monomer may be used alone, or a combination of two or more kinds thereof may be used.

An average primary particle diameter of the acrylic resin particles is preferably 50 nm or more, more preferably 100 nm or more, and still more preferably 200 nm or more, from the viewpoint of the ion permeability of the adhesive layer.

The average primary particle diameter of the acrylic resin particles is preferably 1,000 nm or less, more preferably 800 nm or less, and still more preferably 500 nm or less, from the viewpoint of thinning the adhesive layer, and from the viewpoint of suppressing delamination between the adhesive layer and the porous substrate or the heat-resistant layer and maintaining adhesion of the separator to the electrode.

The average primary particle diameter of the acrylic resin particles is determined by measuring major diameters of 100 acrylic resin particles randomly selected in observation using a scanning electron microscope (SEM) and averaging the major diameters of the 100 particles. A sample subjected to the SEM observation is acrylic resin particles as a material for forming the adhesive layer or acrylic resin particles extracted from the adhesive layer.

A mass proportion of the acrylic resin particles in the adhesive layer is preferably 50 mass% or more, more preferably 90 mass% or more, and still more preferably 95 mass% or more, from the viewpoint of the adhesiveness to the electrode. The mass proportion of the acrylic resin particles in the adhesive layer may be 100 mass%.

-Butadiene-acrylonitrile-based Resin-

The adhesive layer preferably contains a butadiene-acrylonitrile-based resin from the viewpoint of adhesiveness to the heat-resistant layer.

The butadiene-acrylonitrile-based resin may be a binary copolymer of butadiene and acrylonitrile or may be a copolymer of butadiene, acrylonitrile, and another monomer. Examples of the another monomer include a styrene-based monomer and an acrylic monomer.

Examples of the styrene-based monomer include: styrene, $\alpha$-methylstyrene; an alkyl-substituted styrene such as 2-methylstyrene, 3-methylstyrene, 4-methylstyrene, 2-ethylstyrene, 3-ethylstyrene, and 4-ethylstyrene; a halogen-substituted styrene such as 2-chlorostyrene, 3-chlorostyrene, and 4-chlorostyrene; and a fluorine-substituted styrene such as 4-fluorostyrene and 2,5-difluorostyrene. The styrene-based monomer is preferably styrene or $\alpha$-methylstyrene, and more preferably styrene. One kind of the styrene-based monomer may be used alone, or two or more kinds thereof may be used.

Examples of the acrylic monomer include (meth)acrylic acid, methyl (meth)acrylate, ethyl (meth)acrylate, isopropyl (meth)acrylate, n-butyl (meth)acrylate, isobutyl (meth)acrylate, t-butyl (meth)acrylate, n-hexyl (meth)acrylate, 2-ethylhexyl (meth)acrylate, lauryl (meth)acrylate, stearyl (meth)acrylate, cyclohexyl (meth)acrylate, dicyclopentanyl (meth)acrylate, isobornyl (meth)acrylate, 2-hydroxyethyl (meth)acrylate, hydroxypropyl (meth)acrylate, and 4-hydroxybutyl (meth)acrylate. The acrylic monomer is preferably a (meth)acrylic acid alkyl ester. The alkyl group in the ester moiety of the (meth)acrylic acid alkyl ester is preferably an alkyl group having 1 to 10 carbon atoms, and more preferably an alkyl group having 1 to 8 carbon atoms. One kind of the acrylic monomers may be used alone, or two or more kinds thereof may be used.

A molar ratio of the butadiene unit to the acrylonitrile unit (butadiene unit: acrylonitrile unit) contained in the butadiene-acrylonitrile-based resin is preferably 60:40 to 1:99, and more preferably 50:50 to 10:90, from the viewpoint of excellent affinity with a phenyl group-containing acrylic resin. The molar ratio is determined by nuclear magnetic resonance (NMR). The details of the NMR are as described above.

When the adhesive layer contains a butadiene-acrylonitrile-based resin, a mass proportion of the butadiene-acrylonitrile-based resin in the adhesive layer is preferably 5 mass% or more, more preferably 10 mass% or more, and still more preferably 20 mass% or more, from the viewpoint of the adhesiveness to the heat-resistant layer.

The mass proportion of the butadiene-acrylonitrile-based resin in the adhesive layer is preferably 50 mass% or less, more preferably 40 mass% or less, and still more preferably 30 mass% or less, from the viewpoint of reducing internal resistance of the battery.

-Other Resin-

The adhesive layer may contain a resin other than the acrylic resin particles and the butadiene-acrylonitrile-based resin. Examples of the other resin include a polyvinylidene fluoride-based resin, a fluorine-based rubber, a homopolymer or a copolymer of a vinyl nitrile compound (such as acrylonitrile or methacrylonitrile), a carboxymethyl cellulose, a hydroxyalkyl cellulose, a polyvinyl alcohol, a polyvinyl butyral, a polyvinyl pyrrolidone, a polyether (such as polyethylene oxide or polypropylene oxide), and a mixture of two or more kinds thereof. These resins may be contained in the form of resin particles or as a binder resin of the resin particles. One kind of the resin may be used alone, or a combination of two or more kinds thereof may be used.

A mass proportion of the other resin in all resins of the adhesive layer is preferably 10 mass% or less, more preferably 5 mass% or less, and still more preferably 1 mass% or less, and the other resin is particularly preferably not substantially contained.

A total mass proportion of the acrylic resin particles and the butadiene-acrylonitrile-based resin in all resins of the adhesive layer is preferably 90 mass% or more, more preferably 95 mass% or more, still more preferably 99 mass% or more, and particularly preferably 100 mass%.

-Other Components-

The adhesive layer may contain an additive, for example, a dispersant such as a surfactant, a wetting agent, an antifoaming agent, or a pH adjuster. The dispersant is added to, for example, a resin particle dispersion liquid for forming the adhesive layer for the purpose of improving the dispersibility, the coatability, or the storage stability. The wetting agent, the antifoaming agent, or the pH adjuster is added to a resin particle dispersion liquid for forming the adhesive layer, for example, for the purpose of improving the compatibility with the heat-resistant layer or the porous substrate, for the purpose of suppressing mixing of air into the resin particle dispersion liquid, or for the purpose of adjusting the pH.

-Properties of Adhesive Layer-

The mass per unit area of the adhesive layer (in total of both surfaces) is 0.2 g/m$^2$ or more, and preferably 0.3 g/m$^2$ or more, from the viewpoint of the adhesiveness to the electrode.

The mass per unit area of the adhesive layer (in total of both surfaces) is 0.5 g/m$^2$ or less, and preferably 0.4 g/m$^2$ or less, from the viewpoint that the adhesive layer is thin and the battery has excellent cycle properties.

The mass per unit area of the adhesive layer is determined by cutting the separator into 20 cm × 20 cm, measuring a mass of a layer portion corresponding to the adhesive layer, dividing the mass by an area, and calculating the total of both surfaces.

[Properties of Separator]

A thickness of the separator is preferably 5 μm or more, more preferably 7 μm or more, and still more preferably 9 μm or more, from the viewpoint of the mechanical strength.

The thickness of the separator is preferably 15 μm or less, more preferably 12 μm or less, and still more preferably 10 μm or less, from the viewpoint of the energy density of the battery.

The thickness of the separator is determined by measuring thicknesses at 20 points in a 10-cm square using a contact-type thickness meter and taking an average thereof.

A Gurley value of the separator is preferably 60 s/100 mL or more, more preferably 70 s/100 mL or more, and still more preferably 80 s/100 mL or more, from the viewpoint of suppressing a short circuit of the battery.

The Gurley value of the separator is preferably 260 s/100 mL or less, more preferably 250 s/100 mL or less, and still more preferably 240 s/100 mL or less, from the viewpoint of the ion permeability.

A difference between the Gurley value of a laminate (laminate including the porous substrate and the heat-resistant layer disposed on one surface or both surfaces of the porous substrate) and the Gurley value of the separator is preferably 30 s/100 mL or less, more preferably 25 s/100 mL or less, and still more preferably 20 s/100 mL or less.

The Gurley value of the separator is determined by measurement using a Gurley densometer according to JIS P8117:2009.

The Gurley value of the laminate is a Gurley value of a flat film obtained by removing the adhesive layer from the separator. The Gurley value of the flat film is determined by measurement using a Gurley densometer according to JIS P8117:2009.

A porosity of the separator is preferably 30% to 60% from the viewpoint of the ion permeability.

A porosity of the laminate is preferably 30% to 60% from the viewpoint of the ion permeability.

The porosity ε (%) of the separator (or the laminate) is determined according to the following equation.

[Math. 2]

$$\varepsilon = \left( 1 - \frac{\sum_{i=1}^{n} \frac{Wi}{di}}{t} \right) \times 100$$

Here, regarding a constituent material 1, a constituent material 2, a constituent material 3, ..., and a constituent material n of the separator (or the laminate), the mass per unit area of each constituent material is $W_1$, $W_2$, $W_3$, ..., and $W_n$ (g/cm$^2$), the true density of each constituent material is $d_1$, $d_2$, $d_3$, ..., and $d_n$ (g/cm$^3$), and the thickness of the separator (or the laminate) is t (cm).

[Method for Producing Separator]

The separator according to the present disclosure is produced, for example, by a production method A or a production method B below. In the production method A and the production method B, a heat-resistant layer and an adhesive layer are formed on a porous substrate by using a dry coating method. In the present disclosure, the dry coating method is a method of drying a coating layer to solidify the coating layer.

Production method A (non-continuous production method): a heat-resistant layer is formed on a porous substrate unwound from a roll by using a dry coating method to obtain a laminate including the porous substrate and the heat-resistant layer, and then the laminate is once wound around another roll. Next, an adhesive layer is formed by using a dry coating method on the laminate unwound from the roll to obtain a separator, and the finished separator is wound around another roll.

Production method B (continuous production method): a heat-resistant layer is formed on a porous substrate unwound from a roll by using a dry coating method to obtain a laminate including the porous substrate and the heat-resistant layer, an adhesive layer is formed on the laminate by using a dry coating method to obtain a separator, and the finished separator is wound around another roll.

Hereinafter, steps included in the production method B will be described in detail. The production method B includes the following steps (1) to (6), and the steps (1) to (6) are sequentially performed.

Step (1): Preparation of Heat-resistant Layer Forming Coating Liquid

A heat-resistant layer forming coating liquid is prepared by dispersing, in a dispersion medium, a binder resin and inorganic particles for the heat-resistant layer. In the coating liquid, a component other than the binder resin and the inorganic particles is dissolved or dispersed as necessary.

The dispersion medium used for preparing the coating liquid is preferably water. A solid content concentration in the coating liquid may be set to a range in which an appropriate viscosity can be obtained from the viewpoint of coating suitability, and is preferably about 10 mass% to 60 mass%.

Step (2): Preparation of Acrylic Resin Particle Dispersion Liquid

An adhesive layer forming coating liquid is preferably an acrylic resin particle dispersion liquid. The acrylic resin particle dispersion liquid is prepared by dispersing acrylic resin particles in an appropriate dispersion medium (for example, water). A surfactant may be added to the acrylic resin particle dispersion liquid in order to improve the dispersibility of the acrylic resin particles in the dispersion medium. The acrylic resin particle dispersion liquid may be a commercially available product or a dilution liquid of the commercially available product. A butadiene-acrylonitrile-based resin may be added to the acrylic resin particle dispersion liquid.

A concentration of the acrylic resin particles in the acrylic resin particle dispersion liquid is preferably 1 mass% to 60 mass% from the viewpoint of the coating suitability.

Step (3): Coating Using Heat-resistant Layer Forming Coating Liquid

At least one surface of the porous substrate is coated with the heat-resistant layer forming coating liquid to form a coating layer on the porous substrate. Examples of a method for coating the porous substrate with the coating liquid include a knife coating method, a Meyer bar coating method, a die coating method, a reverse roll coating method, a roll coating method, a gravure coating method, a screen printing method, an inkjet method, and a spray method. When the heat-resistant layers are to be formed on both surfaces of the porous substrate, it is preferable to simultaneously coat both surfaces of the porous substrate with the coating liquid from the viewpoint of productivity.

Step (4): Solidification of Coating Layer

The porous substrate on which the coating layer to be a heat-resistant layer is formed is heated and the dispersion medium (for example, water) in the coating liquid is dried, to form the heat-resistant layer. The drying is performed, for example, by conveying the porous substrate on which the coating layer is formed into a high temperature environment, or applying wind to the porous substrate on which the coating layer is formed. A drying temperature is preferably 40°C to 100°C. Accordingly, a laminate including the porous substrate and the heat-resistant layer is obtained.

Step (5): Coating Using Acrylic Resin Particle Dispersion Liquid

At least one surface of the laminate is coated with the acrylic resin particle dispersion liquid. Examples of a method for coating using the acrylic resin particle dispersion liquid include a knife coating method, a gravure coating method, a Meyer bar coating method, a die coating method, a reverse roll coating method, a roll coating method, a screen printing method, an inkjet method, and a spray method. When the adhesive layers are to be formed on both surfaces of the laminate, it is preferable to simultaneously coat both surfaces of the laminate with the acrylic resin particle dispersion liquid from the viewpoint of the productivity.

Step (6): Drying of Acrylic Resin Particle Dispersion Liquid

The acrylic resin particle dispersion liquid on the laminate is dried to adhere the acrylic resin particles to the surface of the laminate. The drying is performed, for example, by transporting the laminate into a high temperature environment, or applying air to the laminate. A drying temperature is preferably 40°C to 100°C.
The production method A can be performed by performing the steps (1) to (4), winding the laminate once around a roll, unwinding the laminate from the roll, and performing the steps (5) and (6).

<Non-aqueous Secondary Battery>

The non-aqueous secondary battery according to the present disclosure is a non-aqueous secondary battery that obtains an electromotive force by doping and de-doping a lithium ion, and includes a positive electrode, a negative electrode, and the separator according to the present disclosure. The doping means occlusion, support, adsorption, or insertion and means a phenomenon that the lithium ion enters an active material of an electrode such as the positive electrode.
The non-aqueous secondary battery according to the present disclosure has a structure in which, for example, a battery element in which a negative electrode and a positive electrode face each other with a separator interposed therebetween is enclosed in an exterior material together with an electrolyte solution. The non-aqueous secondary battery according to the present disclosure is suitable for a non-aqueous electrolyte secondary battery, particularly for a lithium ion secondary battery.
The non-aqueous secondary battery according to the present disclosure has excellent impact resistance and cycle properties by including the separator according to the present disclosure.
Hereinafter, form examples of the positive electrode, the negative electrode, the electrolyte solution, and the exterior material included in the non-aqueous secondary battery according to the present disclosure will be described.
Embodiment examples of the positive electrode include a structure in which an active material layer containing a positive electrode active material and a binder resin is disposed on a current collector. The active material layer may further contain a conductive auxiliary agent. Examples of the positive electrode active material include a lithium-containing transition metal oxide, and specific examples thereof include $LiCoO_2$, $LiNiO_2$, $LiMn_{1/2}Ni_{1/2}O_2$, $LiCo_{1/3}Mn_{1/3}Ni_{1/3}O_2$, $LiMn_2O_4$, $LiFePO_4$, $LiCo_{1/2}Ni_{1/2}O_2$, and $LiAl_{1/4}Ni_{3/4}O_2$. Examples of the binder resin include a polyvinylidene fluoride-based resin and a styrene-butadiene copolymer. Examples of the conductive auxiliary agent include carbon materials such as acetylene black, Ketjen black, and a graphite powder. Examples of the current collector include an aluminum foil, a titanium foil, and a stainless steel foil, each having a thickness of 5 $\mu$m to 20 $\mu$m.
Embodiment examples of the negative electrode include a structure in which an active material layer containing a negative electrode active material and a binder resin is disposed on a current collector. The active material layer may further contain a conductive auxiliary agent. Examples of the negative electrode active material include materials capable of electrochemically occluding a lithium ion, and specific examples thereof include carbon materials, alloys of lithium with silicon, tin, aluminum, or the like, and a wood's alloy. Examples of the binder resin include a polyvinylidene fluoride-based resin and a styrene-butadiene copolymer. Examples of the conductive auxiliary agent include carbon materials such as acetylene black, Ketjen black, a graphite powder, and an ultrafine carbon fiber. Examples of the current collector include a copper foil, a nickel foil, and a stainless steel foil, each having a thickness of 5 $\mu$m to 20 $\mu$m. Instead of the negative electrode above, a metal lithium foil may be used as the negative electrode.
The electrolyte solution is preferably a solution obtained by dissolving a lithium salt in a non-aqueous solvent. Examples of the lithium salt include $LiPF_6$, $LiBF_4$, and $LiClO_4$. Examples of the non-aqueous solvent include: cyclic carbonates such as ethylene carbonate, propylene carbonate, fluoroethylene carbonate, difluoroethylene carbonate, and vinylene carbonate; chain carbonates such as dimethyl carbonate, diethyl carbonate, ethyl methyl carbonate, and a fluorine-substituted compound thereof; and cyclic esters such as $\gamma$-butyrolactone and $\gamma$-valerolactone, and these non-aqueous solvents may be used alone or as a mixture. The electrolyte solution is suitably a solution which is obtained by mixing a cyclic carbonate and a chain carbonate at a mass ratio (cyclic carbonate: chain carbonate) of 20:80 to 40:60 and dissolving a lithium salt therein in a range of 0.5 mol/L to 1.5 mol/L.
Examples of the exterior material include an aluminum laminated film pack and a metal can. A shape of the battery is a square shape, a cylindrical shape, a coin shape, or the like, and the separator according to the present disclosure is suitable for any shape.

The non-aqueous secondary battery according to the present disclosure can be produced, for example, by a production method 1 or a production method 2 below using a laminated product in which the separator according to the present disclosure is disposed between a positive electrode and a negative electrode after producing the laminated product.

Production method 1: electrodes and the separator are temporarily bonded by dry heat pressing a laminated product and then housed in an exterior material (for example, an aluminum laminated film pack; the same applies hereinafter), and an electrolyte solution is injected thereto. Next, the laminated product is wet heat pressed from over the exterior material to bond the electrodes and the separator and seal the exterior material.

Production method 2: a laminated product is housed in an exterior material, and an electrolyte solution is injected thereto. Next, the laminated product is wet heat pressed from over the exterior material to bond the electrodes and a separator and seal the exterior material.

In the production method 1 and the production method 2, a press temperature in the wet heat press is preferably 50°C to 95°C, and more preferably 60°C to 90°C. A press pressure in the wet heat press is preferably 0.1 MPa to 2 MPa, and more preferably 0.5 MPa to 1.5 MPa. A press time for the wet heat press is preferably adjusted according to the press temperature and the press pressure, and is adjusted, for example, in a range of 1 minute to 20 hours.

In the production of the laminated product in which the separator is disposed between the positive electrode and the negative electrode, a method of disposing the separator between the positive electrode and the negative electrode may be a method of laminating one by one at least one layer of the positive electrode, the separator, and the negative electrode in this order (a so-called stack method) or may be a method of laminating the positive electrode, the separator, the negative electrode, and the separator in this order and winding them in a length direction.

Examples

Hereinafter, the separator and the non-aqueous secondary battery according to the present disclosure will be further specifically described with reference to Examples. The materials, the used amounts, the proportions, the treatment procedures, and the like described in the following Examples can be changed, if appropriate, without departing from the gist of the present disclosure. Therefore, the ranges of the separator and the non-aqueous secondary battery according to the present disclosure should not be interpreted by the following specific examples in a limited manner.

In the following description, synthesis, treatment, production, and the like were performed at room temperature (25°C ± 3°C) unless otherwise specified.

<Measurement Methods and Evaluation Methods>

The measurement methods and the evaluation methods applied in Examples and Comparative Examples are as follows.

[Thicknesses of Porous Substrate and Separator]

The thicknesses of the porous substrate and the separator were determined by measuring thicknesses at 20 points in a 10-cm square using a contact-type thickness meter (LITEMATIC VL-50S, manufactured by Mitutoyo Corporation) and taking an average thereof. A spherical probe (Mitutoyo Corporation) having a sphere radius of 10 mm was used for a measuring terminal and was adjusted such that a load of 0.19 N was applied during the measurement.

[Thickness of Heat-resistant Layer]

The thickness was determined by subtracting the thickness of the porous substrate from a thickness of a flat film obtained by removing the adhesive layer from the separator. The thickness of the flat film was determined by measuring thicknesses at 20 points in a 10-cm square using a contact-type thickness meter (LITEMATIC VL-50S, manufactured by Mitutoyo Corporation) and taking an average thereof. A spherical probe (Mitutoyo Corporation) having a sphere radius of 10 mm was used for a measuring terminal and was adjusted such that a load of 0.19 N was applied during the measurement.

[Mass per Unit Area of Adhesive Layer]

A basis weight ($g/m^2$) in total of both surfaces was determined by cutting the separator into 20 cm × 20 cm, measuring a mass of a layer portion corresponding to the adhesive layer, and dividing the mass by an area.

[Gurley Values of Porous Substrate, Laminate, and Separator]

The Gurley value (s/100 mL) of each of the porous substrate, the laminate, and the separator was measured using a Gurley densometer (G-B2C manufactured by Toyo Seiki Seisaku-sho, Ltd.) according to JIS P8117:2009.

The Gurley value of the laminate was subtracted from the Gurley value of the separator to determine the difference in Gurley value.

[Average Primary Particle Diameter of Inorganic Particles]

The inorganic particles for forming the heat-resistant layer were used as a sample, which was observed using a scanning electron microscope (SEM) to determine the average primary particle diameter. Specifically, major diameters of 100 inorganic particles randomly selected in observation using a SEM were measured, and the average value of the major diameters of the 100 inorganic particles was defined as the average primary particle diameter (μm).

[Average Primary Particle Diameter of Acrylic Resin Particles]

A dried product of an acrylic resin particle dispersion liquid for forming the adhesive layer was used as a sample, which was observed using a SEM to determine the average primary particle diameter. Specifically, major diameters of 100 acrylic resin particles randomly selected in observation using a SEM were measured, and the average value of the major diameters of the 100 acrylic resin particles was defined as the average primary particle diameter (μm).

[Thermal Shrinkage Rate]

The separator was cut out into a rectangle of 60 mm in TD × 180 mm in MD to prepare a test piece. The test piece was imparted with marks at positions 20 mm and 170 mm from one end on a line bisecting the TD (referred to as a point A and a point B, respectively). Further, the test piece was imparted with marks at positions 10 mm and 50 mm from one end on a line bisecting the test piece in the MD (referred to as a point C and a point D, respectively). A clip was attached to the test piece (the place where the clip was attached was between the end closest to the point A and the point A), the test piece was hanged in an oven at a temperature of 150°C, and a heat treatment was performed for 30 minutes under no tension. A length between A and B and a length between C and D were measured before and after the heat treatment, a thermal shrinkage rate was calculated according to the following equation, and further, the thermal shrinkage rates of three test pieces were averaged.

MD thermal shrinkage rate (%) = {(length between A and B before heat treatment - length between A and B after heat treatment)/length between A and B before heat treatment} × 100 TD thermal shrinkage rate (%) = {(length between C and D before heat treatment - length between C and D after heat treatment)/length between C and D before heat treatment} × 100

[Adhesiveness to Electrode]

A test secondary battery to be described later was prepared. The battery was subjected to a compression bending test (three-point bending measurement). The measurement was performed by attaching a compression bending test jig to TENSILON (STB-1225S, manufactured by A&D Company, Limited). A distance to a support stage was set to 4 cm, and the battery was placed on the support stage such that a short side direction of the battery was parallel to a long side direction of an indenter and such that a compression position during the measurement was at the center in the long side direction of the electrodes in the battery. A displacement obtained when the indenter was lowered until a load of 0.1 N was applied was set to 0, and the measurement was started. A compression rate during the measurement was set to 2 mm/min, and the measurement was performed up to a displacement of 2 mm. A modulus gradient (unit: N/mm) in a load displacement curve obtained from this result was defined as adhesive strength.

[Cycle Properties (Capacity Retention Rate) of Battery]

Ten test secondary batteries to be described later were prepared. Under an environment of a temperature of 20°C, constant-current and constant-voltage charging at 0.1 C and 4.2 V for 15 hours and constant-current discharging at 0.1 C and 2.5 V cut-off were performed on the battery for three cycles, and a discharge capacity after the three cycles was taken as a cell capacity. Next, under an environment of a temperature of 20°C, constant-current charging at 3 C and 4.2 V cutoff and constant-current discharging at 3 C and 2.5 V cutoff were performed on the battery for 300 cycles. A charge capacity at the 300th cycle was divided by the cell capacity to calculate the average of the ten batteries, and the obtained value (%) was taken as a capacity retention rate.

[Impact Resistance (Compression Breaking Strength) of Battery]

Ten test secondary batteries to be described later were prepared. Under an environment of a temperature of 20°C, constant-current and constant-voltage charging was performed on the battery. Specifically, the battery was charged to 4.2 V at 0.1 C and held at 4.2 V for 3 hours. Next, the battery was placed on a horizontal stand with the positive electrode side facing upward, and fixed to the horizontal stand using an adhesive tape. A spherical terminal having a diameter of 5 mm was placed in a central portion on the battery, and gradually lowered at a speed of 100 mm/min to apply a load to the battery. The value (unit: N) of the load at the moment when the voltage of the battery decreased and reached 3.5 V was determined, and the average of the ten batteries was calculated.

<Preparation of Separator and Battery>

[Example 1]

-Preparation of Separator-

To water, a styrene-butadiene rubber (SBR) and barium sulfate particles (average primary particle diameter: 0.10 $\mu$m) were added and stirred to obtain a coating liquid (1). The coating liquid (1) had an SBR concentration of 3.5 mass% and a mass ratio of barium sulfate particles to SBR of 97:3.
An acrylic resin particle dispersion liquid (acrylic resin: methyl methacrylate-styrene copolymer, dispersion medium: water, solid content concentration: 7.0 mass%) was prepared. A dried product of the acrylic resin particle dispersion liquid was used as a sample to be subjected to SEM observation, and the average primary particle diameter of the acrylic resin particles was determined to be 500 nm.
The acrylic resin particle dispersion liquid and the butadiene-acrylonitrile copolymer are stirred and mixed to obtain a coating liquid (2). The mixing ratio was set such that the mass ratio of the solid content of the resin particle dispersion liquid to the butadiene-acrylonitrile copolymer was 99:1.
An appropriate amount of the coating liquid (1) was placed on a pair of Meyer bars, and a polyethylene microporous film (thickness: 5.6 $\mu$m, Gurley value 120 s/100 mL) was passed through between the Meyer bars, to be coated with an equal amount of the coating liquid (1) on both surfaces, followed by drying. Next, this was passed through between a pair of bar coaters on which an appropriate amount of the coating liquid (2) was placed, to be coated with an equal amount of the coating liquid (2) on both surfaces, followed by drying. In this way, a separator in which the heat-resistant layer and the adhesive layer were formed on both surfaces of the polyethylene microporous film was obtained.

-Preparation of Positive Electrode-

Using a double-armed mixer, 89.5 parts by mass of a lithium cobalt oxide powder as a positive electrode active material, 4.5 parts by mass of acetylene black as a conductive auxiliary agent, 6 parts by mass of polyvinylidene fluoride as a binder resin, and an appropriate amount of N-methyl-2-pyrrolidone were stirred and mixed to prepare a positive electrode slurry. The positive electrode slurry was applied to both surfaces or one surface of an aluminum foil having a thickness of 20 $\mu$m, dried and then pressed to obtain a positive electrode having a positive electrode active material layer on both surfaces or one surface.

-Preparation of Negative Electrode-

Using a double-armed mixer, 300 parts by mass of artificial graphite as a negative electrode active material, 7.5 parts by mass of a water-soluble dispersion liquid containing 40 mass% of a modified product of a styrene-butadiene copolymer as a binder resin, 3 parts by mass of carboxymethyl cellulose as a thickener, and an appropriate amount of water were stirred and mixed to prepare a negative electrode slurry. The negative electrode slurry was applied to both surfaces or one surface of a copper foil having a thickness of 10 $\mu$m, dried and then pressed to obtain a negative electrode having a negative electrode active material layer on both surfaces or one surface.

-Preparation of Battery for Evaluation of Adhesiveness to Electrode-

The double-sided positive electrode and the double-sided negative electrode were cut into rectangles of 30 mm

$\times$ 70 mm.

The separator was cut into a rectangle of 35 mm in TD $\times$ 75 mm in MD.

The positive electrodes and the negative electrodes were alternately laminated such that the separator was sandwiched between the positive electrode and the negative electrode, to prepare a laminated product composed of three positive electrodes, three negative electrodes, and five separators. The laminated product was inserted into an aluminum laminated film pack, an electrolyte solution (1 mol/L LiPF$_6$-ethylene carbonate: ethyl methyl carbonate [mass ratio: 3:7]) was injected into the pack, and the laminated product was impregnated with the electrolyte solution. Next, the laminated product together with the pack was subjected to hot press using a hot press machine in a lamination direction (wet heat press), thereby bonding the electrodes to the separator. The conditions in the hot press were a press temperature of 85°C, a press pressure of 1 MPa, and a press time of 5 minutes. The test secondary battery thus obtained was subjected to evaluation of adhesiveness to an electrode.

-Preparation of Battery for Evaluation of Cycle Properties and Impact Resistance-

The single-sided positive electrode and the single-sided negative electrode were cut into rectangles of 14 mm $\times$ 20 mm.

The separator was cut into a rectangle of 20 mm in TD $\times$ 26 mm in MD.

Lamination was performed such that the positive electrode active material layer and the negative electrode active material layer faced each other and such that the separator was sandwiched between the positive electrode and the negative electrode, to prepare a laminated product composed of one positive electrode, one negative electrode, and one separator. The laminated product was inserted into an aluminum laminated film pack, an electrolyte solution (1 mol/L LiPF$_6$-ethylene carbonate: ethyl methyl carbonate [mass ratio: 3:7]) was injected into the pack, and the laminated product was impregnated with the electrolyte solution. Next, the laminated product together with the pack was subjected to hot press using a hot press machine in a lamination direction (wet heat press), thereby bonding the electrodes to the separator. The conditions in the hot press were a press temperature of 85°C, a press pressure of 1 MPa, and a press time of 5 minutes. The test secondary battery thus obtained was subjected to evaluation of cycle properties and impact resistance of the battery.

[Example 2]

A separator was prepared in the same manner as in Example 1 except that barium sulfate particles (average primary particle diameter: 0.10 $\mu$m) were changed to $\gamma$-alumina (average primary particle diameter: 0.01 $\mu$m). A test secondary battery was prepared using this separator.

[Example 3]

A separator was prepared in the same manner as in Example 1 except that barium sulfate particles (average primary particle diameter: 0.10 $\mu$m) were changed to boehmite (average primary particle diameter: 0.10 $\mu$m). A test secondary battery was prepared using this separator.

[Example 4]

A separator was prepared in the same manner as in Example 1 except that barium sulfate particles (average primary particle diameter: 0.10 $\mu$m) were changed to boehmite (average primary particle diameter: 0.10 $\mu$m) and the coating surface of the heat-resistant layer was changed to one surface of the polyethylene microporous film. A test secondary battery was prepared using this separator.

[Example 5]

A separator was prepared in the same manner as in Example 1 except that SBR was changed to poly(n-butyl acrylate) and barium sulfate particles (average primary particle diameter: 0.10 $\mu$m) were changed to boehmite (average primary particle diameter: 0.10 $\mu$m). A test secondary battery was prepared using this separator.

[Examples 6 and 7]

Separators were each prepared in the same manner as in Example 1 except that the coating amount of the adhesive layer was changed. Test secondary batteries were prepared using the corresponding separator.

[Example 8]

A separator was prepared in the same manner as in Example 1 except that the average primary particle diameter of the barium sulfate particles was changed from 0.10 μm to 0.30 μm. A test secondary battery was prepared using this separator.

[Example 9]

A separator was prepared in the same manner as in Example 1 except that the composition of the coating liquid (1) was changed to barium sulfate particles: SBR = 95:5 [mass ratio]. A test secondary battery was prepared using this separator.

[Comparative Example 1]

A mixed solvent of dimethylacetamide (DMAc) and tripropylene glycol (TPG) (DMAc:TPG = 80:20 [mass ratio]) was prepared. Polymetaphenylene isophthalamide was dissolved in the mixed solvent, and barium sulfate particles (average primary particle diameter: 0.10 μm) were further added and stirred to obtain a coating liquid (C1). The coating liquid (C1) had a polymetaphenylene isophthalamide concentration of 4.5 mass%, and a mass ratio of the barium sulfate particles to polymetaphenylene isophthalamide of 97:3.

A separator was prepared in the same manner as in Example 1 except that the coating liquid (1) was changed to the coating liquid (C1). However, a large amount of barium sulfate particles could not be bound, and a heat-resistant layer could not be formed.

[Comparative Example 2]

Since the heat-resistant layer was not formed in Comparative Example 1, the content of the barium sulfate particles was reduced to prepare a separator.

That is, a separator was prepared in the same manner as in Comparative Example 1 except that the composition of the coating liquid (C1) was changed to barium sulfate particles: polymetaphenylene isophthalamide = 80:20 [mass ratio]. A test secondary battery was prepared using this separator.

[Comparative Example 3]

A separator was prepared in the same manner as in Example 1 except that barium sulfate particles (average primary particle diameter: 0.10 μm) were changed to boehmite (average primary particle diameter: 2.3 μm), the coating surface of the heat-resistant layer was changed to one surface of the polyethylene microporous film, and the thickness of the heat-resistant layer was changed. A test secondary battery was prepared using this separator.

[Comparative Examples 4 and 5]

Separators were each prepared in the same manner as in Example 1 except that barium sulfate particles (average primary particle diameter: 0.10 μm) were changed to boehmite (average primary particle diameter: 0.10 μm) and the coating amount of the adhesive layer was changed. Test secondary batteries were prepared using the corresponding separator.

The abbreviations in Table 1 are as follows.

· PE: polyethylene
· SBR: styrene-butadiene rubber
· Aramid: polymetaphenylene isophthalamide

[Table 1]

| | Porous substrate | | Heat-resistant layer | | | | | | Adhesive layer | | | | Separator | | | | Battery | |
|---|---|---|---|---|---|---|---|---|---|---|---|---|---|---|---|---|---|---|
| | Material | Thickness | Binder resin | Inorganic particles | | | Thickness (per layer) | Coating surface | Material | | Mass (in total of both surfaces) | Coating surface | Difference in Gurley value | Thermal shrinkage rate | | Adhesiveness to electrode | Cycle properties | Impact resistance |
| | | | Kind | Kind | Average primary particle diameter | Content | | | | | | | | MD | TD | | | |
| | - | μm | - | - | μm | mass% | μm | - | - | - | g/m² | - | s/100 mL | % | % | N/mm | % | N |
| Ex. 1 | PE | 5.6 | SBR | Barium sulfate | 0.10 | 97 | 1 | Both surfaces | Acrylic resin particles | Butadiene acrylonitrile | 0.3 | Both surfaces | 20 | 1 | 1 | 12.2 | 51 | 588 |
| Ex. 2 | PE | 5.6 | SBR | γ-alumina | 0.01 | 97 | 1 | Both surfaces | Acrylic resin particles | Butadiene acrylonitrile | 0.3 | Both surfaces | 50 | 1 | 1 | 12.2 | 45 | 601 |
| Ex. 3 | PE | 5.6 | SBR | Boehmite | 0.10 | 97 | 1 | Both surfaces | Acrylic resin particles | Butadiene acrylonitrile | 0.3 | Both surfaces | 24 | 1 | 1 | 12.2 | 49 | 583 |
| Ex. 4 | PE | 5.6 | SBR | Boehmite | 0.10 | 97 | 1 | One surface | Acrylic resin particles | Butadiene acrylonitrile | 0.3 | Both surfaces | 5 | 51 | 54 | 12.1 | 50 | 478 |
| Ex. 5 | PE | 5.6 | Butyl acrylate resin | Boehmite | 0.10 | 97 | 1 | Both surfaces | Acrylic resin particles | Butadiene acrylonitrile | 0.3 | Both surfaces | 25 | 1 | 1 | 12.1 | 46 | 584 |
| Ex. 6 | PE | 5.6 | SBR | Barium sulfate | 0.10 | 97 | 1 | Both surfaces | Acrylic resin particles | Butadiene acrylonitrile | 0.2 | Both surfaces | 21 | 1 | 1 | 12.0 | 55 | 587 |
| Ex. 7 | PE | 5.6 | SBR | Barium sulfate | 0.10 | 97 | 1 | Both surfaces | Acrylic resin particles | Butadiene acrylonitrile | 0.5 | Both surfaces | 22 | 1 | 1 | 12.2 | 41 | 589 |
| Ex. 8 | PE | 5.6 | SBR | Barium sulfate | 0.30 | 97 | 1 | Both surfaces | Acrylic resin particles | Butadiene acrylonitrile | 0.3 | Both surfaces | 20 | 2 | 3 | 12.2 | 55 | 586 |

(continued)

| | Porous substrate | | Heat-resistant layer | | | | | | Adhesive layer | | | | Separator | | | | Battery | |
|---|---|---|---|---|---|---|---|---|---|---|---|---|---|---|---|---|---|---|
| | Material | Thickness | Binder resin | Inorganic particles | | | Thickness (per layer) | Coating surface | Material | | Mass (in total of both surfaces) | Coating surface | Difference in Gurley value | Thermal shrinkage rate | | Adhesiveness to electrode | Cycle properties | Impact resistance |
| | | | Kind | Kind | Average primary particle diameter | Content | | | | | | | | MD | TD | | | |
| | - | μm | - | - | μm | mass% | μm | - | - | - | g/m² | - | s/100 mL | % | % | N/mm | % | N |
| Ex. 9 | PE | 5.6 | SBR | Barium sulfate | 0.10 | 95 | 1 | Both surfaces | Acrylic resin particles | Butadiene acrylonitrile | 0.3 | Both surfaces | 20 | 1 | 1 | 12.2 | 50 | 556 |

*Ex.: Example

[Table 1] (continued)

| | Porous substrate | | Heat-resistant layer | | | | | | Adhesive layer | | | | Separator | | | | Battery | |
|---|---|---|---|---|---|---|---|---|---|---|---|---|---|---|---|---|---|---|
| | Material | Thickness | Binder resin Kind | Inorganic particles Kind | Average primary particle diameter | Content | Thickness (per layer) | Coating surface | Material | | Mass (in total of both surfaces) | Coating surface | Difference in Gurley value | Thermal shrinkage rate MD | TD | Adhesiveness to electrode | Cycle properties | Impact resistance |
| | - | μm | - | - | μm | mass% | μm | - | - | - | g/m² | - | s/100 mL | % | % | N/mm | % | N |
| Com. Ex. 1 | PE | 5.6 | Aramid | Barium sulfate | 0.10 | 97 | Formation is not possible | | - | | | | - | | | | - | |
| Com. Ex. 2 | PE | 5.6 | Aramid | Barium sulfate | 0.10 | 80 | 1 | Both surfaces | Acrylic resin particles | Butadiene acrylonitrile | 0.3 | Both surfaces | 65 | 7 | 5 | 12.5 | 30 | 476 |
| Com. Ex. 3 | PE | 5.6 | SBR | Boehmite | 2.3 | 97 | 3 | One surface | Acrylic resin particles | Butadiene acrylonitrile | 0.3 | Both surfaces | 20 | 63 | 62 | 12.4 | 49 | 450 |
| Com. Ex. 4 | PE | 5.6 | SBR | Boehmite | 0.10 | 97 | 1 | Both surfaces | Acrylic resin particles | Butadiene acrylonitrile | 0.1 | Both surfaces | 34 | 2 | 1 | 5.3 | 64 | 582 |
| Com. Ex. 5 | PE | 5.6 | SBR | Boehmite | 0.10 | 97 | 1 | Both surfaces | Acrylic resin particles | Butadiene acrylonitrile | 0.6 | Both surfaces | 52 | 1 | 1 | 13.3 | 27 | 584 |

*Com. Ex.: Comparative Example

All the documents, patent applications, and technical standards described in this description are incorporated in this description by reference to the same extent as if each of the documents, the patent applications, and the technical standards were specifically and individually indicated to be incorporated herein by reference.

The disclosure of Japanese Patent Application No. 2023-188884 filed on November 2, 2023 is all incorporated herein by reference.

Reference Signs List

10A, 10B, 10C, 10D, 10E: separator
20: porous substrate
30: heat-resistant layer
40: laminate
50: adhesive layer
52: acrylic resin particles

**Claims**

1. A separator for a non-aqueous secondary battery comprising:

   a porous substrate;
   a heat-resistant layer disposed on one surface or both surfaces of the porous substrate and containing inorganic particles and a binder resin; and
   an adhesive layer disposed on one surface or both surfaces of a laminate including the porous substrate and the heat-resistant layer and containing acrylic resin particles, wherein
   the inorganic particles have a mass proportion of 95 mass% or more in the heat-resistant layer,
   the inorganic particles contained in the heat-resistant layer have an average primary particle diameter of 0.01 $\mu$m to 0.30 $\mu$m,
   the binder resin includes at least one selected from the group consisting of a butadiene-based polymer and an acrylic resin, and
   the adhesive layer has a mass per unit area of 0.2 g/m$^2$ to 0.5 g/m$^2$ in total of both surfaces.

2. The separator for a non-aqueous secondary battery according to claim 1, wherein the inorganic particles include at least one selected from the group consisting of metal oxide particles, metal hydroxide particles, and metal sulfate particles.

3. The separator for a non-aqueous secondary battery according to claim 1, wherein the inorganic particles include barium sulfate particles.

4. The separator for a non-aqueous secondary battery according to claim 1, wherein the acrylic resin particles contained in the adhesive layer has an average primary particle diameter of 50 nm to 1,000 nm.

5. The separator for a non-aqueous secondary battery according to claim 1, wherein the porous substrate has a thickness of 1 $\mu$m to 7 $\mu$m.

6. The separator for a non-aqueous secondary battery according to claim 1, wherein the heat-resistant layer has a thickness of 0.1 $\mu$m to 2 $\mu$m per layer.

7. The separator for a non-aqueous secondary battery according to claim 1, wherein the adhesive layer further contains a butadiene-acrylonitrile-based resin.

8. The separator for a non-aqueous secondary battery according to claim 1, wherein a difference between a Gurley value of the laminate and a Gurley value of the separator for a non-aqueous secondary battery is 30 s/100 mL or less.

9. A non-aqueous secondary battery that obtains an electromotive force by doping and de-doping a lithium ion, the non-aqueous secondary battery comprising:

a positive electrode;
a negative electrode; and
the separator for a non-aqueous secondary battery according to any one of claims 1 to 8 disposed between the positive electrode and the negative electrode.

FIG.1

10A

52

50

30
20
30

40

50

52

FIG.2

10B

52

50

30
20
30

40

FIG.3

10C

52

50

30
20

40

50

52

FIG.4

FIG.5

## INTERNATIONAL SEARCH REPORT

International application No.

**PCT/JP2024/039134**

### A. CLASSIFICATION OF SUBJECT MATTER

*H01M 50/451*(2021.01)i; *H01M 50/414*(2021.01)i; *H01M 50/42*(2021.01)i; *H01M 50/434*(2021.01)i; *H01M 50/443*(2021.01)i; *H01M 50/446*(2021.01)i; *H01M 50/457*(2021.01)i; *H01M 50/489*(2021.01)i; *H01M 50/491*(2021.01)i

FI:    H01M50/451; H01M50/414; H01M50/42; H01M50/434; H01M50/443 B; H01M50/443 E; H01M50/443 M; H01M50/446; H01M50/457; H01M50/489; H01M50/491

According to International Patent Classification (IPC) or to both national classification and IPC

### B. FIELDS SEARCHED

Minimum documentation searched (classification system followed by classification symbols)

H01M50/451; H01M50/414; H01M50/42; H01M50/434; H01M50/443; H01M50/446; H01M50/457; H01M50/489; H01M50/491

Documentation searched other than minimum documentation to the extent that such documents are included in the fields searched

Published examined utility model applications of Japan 1922-1996
Published unexamined utility model applications of Japan 1971-2024
Registered utility model specifications of Japan 1996-2024
Published registered utility model applications of Japan 1994-2024

Electronic data base consulted during the international search (name of data base and, where practicable, search terms used)

### C. DOCUMENTS CONSIDERED TO BE RELEVANT

| Category* | Citation of document, with indication, where appropriate, of the relevant passages | Relevant to claim No. |
|---|---|---|
| Y | JP 2023-040938 A (TEIJIN LIMITED) 23 March 2023 (2023-03-23) claims 1, 3, 12, examples | 1-6, 8-9 |
| A | | 7 |
| Y | JP 2023-097402 A (TORAY INDUSTRIES, INC.) 07 July 2023 (2023-07-07) paragraphs [0030], [0044]-[0047], examples | 1-6, 8-9 |
| Y | WO 2019/130994 A1 (TEIJIN LIMITED) 04 July 2019 (2019-07-04) claim 6, paragraph [0151], examples A4 | 8 |
| A | WO 2022/205165 A1 (NINGDE AMPEREX TECHNOLOGY LTD.) 06 October 2022 (2022-10-06) entire text | 1-9 |

☐ Further documents are listed in the continuation of Box C.     ☑ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered to be of particular relevance | | |
| "D" | document cited by the applicant in the international application | "X" | document of particular relevance; the claimed invention cannot be considered novel or cannot be considered to involve an inventive step when the document is taken alone |
| "E" | earlier application or patent but published on or after the international filing date | | |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | "&" | document member of the same patent family |
| "P" | document published prior to the international filing date but later than the priority date claimed | | |

| Date of the actual completion of the international search | Date of mailing of the international search report |
|---|---|
| **27 December 2024** | **14 January 2025** |

| Name and mailing address of the ISA/JP | Authorized officer |
|---|---|
| **Japan Patent Office (ISA/JP)** 3-4-3 Kasumigaseki, Chiyoda-ku, Tokyo 100-8915 Japan | |
| | Telephone No. |

Form PCT/ISA/210 (second sheet) (July 2022)

## INTERNATIONAL SEARCH REPORT
### Information on patent family members

International application No.

**PCT/JP2024/039134**

| Patent document cited in search report | | | Publication date (day/month/year) | Patent family member(s) | | | Publication date (day/month/year) |
|---|---|---|---|---|---|---|---|
| JP | 2023-040938 | A | 23 March 2023 | EP | 4401229 | A1 | |
| | | | | claims 1, 3, 12, examples | | | |
| | | | | CN | 117916940 | A | |
| | | | | KR | 10-2024-0035893 | A | |
| JP | 2023-097402 | A | 07 July 2023 | (Family: none) | | | |
| WO | 2019/130994 | A1 | 04 July 2019 | US | 2021/0057703 | A1 | |
| | | | | claim 6, paragraph [0205], examples A4 | | | |
| | | | | EP | 3734698 | A1 | |
| | | | | CN | 111492504 | A | |
| | | | | KR | 10-2020-0102437 | A | |
| WO | 2022/205165 | A1 | 06 October 2022 | JP | 2024-511464 | A | |
| | | | | US | 2024/0079727 | A1 | |
| | | | | EP | 4318777 | A1 | |
| | | | | CN | 114144932 | A | |
| | | | | KR | 10-2023-0141889 | A | |
| | | | | CN | 118213709 | A | |
| | | | | CN | 118213710 | A | |

Form PCT/ISA/210 (patent family annex) (July 2022)

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- WO 2020246497 A
- JP 2023040938 A
- JP 2019523518 A
- JP 2023188884 A